# EUROPEAN PATENT APPLICATION

(11) **EP 0 982 730 A2**
(43) Date of publication of application: **01.03.2000**
(21) Application number: 99116420.3
(22) Date of filing: 20.08.1999
(51) Int. Cl.: G11B 27/30, G11B 27/10, G11B 15/02, G11B 27/34, H04N 7/088, H04N 5/782, H04N 5/775

(54) **Digital data recording/reproducing apparatus**

(30) Priority: 21.08.1998 JP 23530998
(71) Applicant: Matsushita Electric Industrial Co., Ltd., Kadoma-shi, Osaka 571-8501 (JP)
(72) Inventor: Egusa, Yo, Kyoto-shi, Kyoto 612-0803 (JP); Ota, Yutaka, Neyagawa-shi, Osaka 572-0001 (JP)
(74) Representative: Grünecker, Kinkeldey, Stockmair & Schwanhäusser Anwaltssozietät

(57) **Abstract**

When recording plural pieces of digital data, short packs generated from the data in a pack generating circuit 1 are mixed by an arbitrary sequence and ratio in a pack mixing circuit 2, and inserted into the VBI in the analog video signal in a pack inserting circuit 4, and recorded on a magnetic tape through a magnetic recording and reproducing circuit 5. When reproducing the data, from the VBI in the reproduced analog video signals, packs are extracted by a pack extracting circuit 6, and packs are separated by using the pack header disposed in the pack by a pack separating circuit, and restored into the original plural pieces of digital data in a digital data restoring circuit 9. This constitution presents a digital data recording and reproducing apparatus having a degree of freedom in the recording density of each digital data.

## Description

### FIELD OF THE INVENTION

The present invention relates to a method and apparatus for processing of digital data in a vertical blanking interval (VBI) of video signal in a video tape recorder (VTR).

### BACKGROUND OF THE INVENTION

A conventional example of digital data recording/reproducing apparatus having means and method for processing digital data existing in the VBI in the video signal to be recorded and reproduced is disclosed, for example, in Japanese Laid-open Patent No. 8-505729. This prior art is described below.

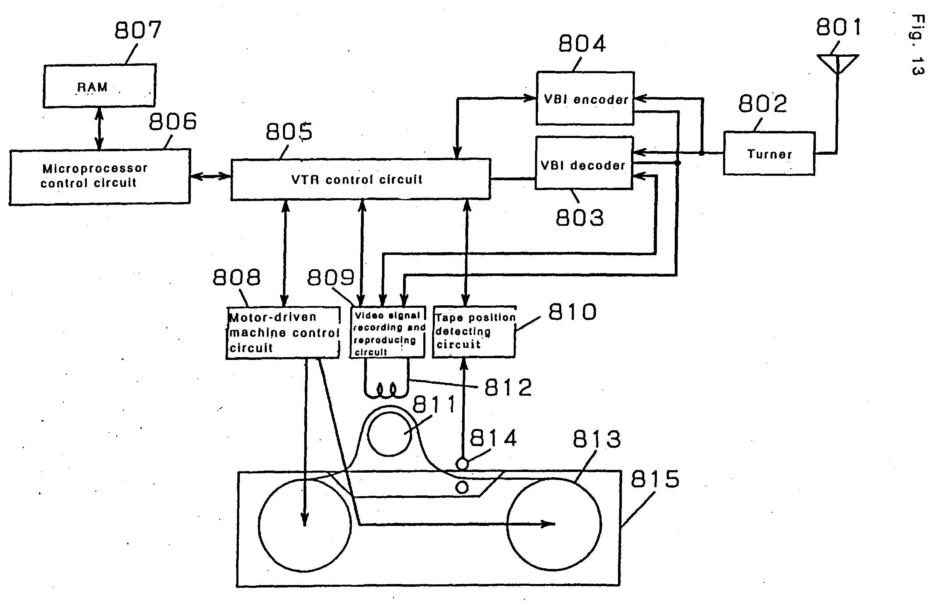

Fig. 13 is a block diagram of a conventional VTR using a video tape cassette 815. As the VTR, a consumer-use analog VTR represented by the VHS standard can be applied.

All operations for recording and reproducing of the VTR are supervised and controlled by a VTR control circuit 805. Although not shown, receiving an instruction signal from the user by manipulation of button or the like, the following control signal is sent out. That is, a control signal is sent out to a VBI decoder 803 for demodulating the digital signal existing in the VBI in the video signal received through an antenna 801 and demodulated by a tuner 802, or the video signal reproduced from a magnetic tape 813 into character data, or a VBI encoder 804 for deriving a digital signal for recording the character data into a magnetic tape.

Control signals are also sent out into a motor-driven machine control circuit 808, a video signal processing circuit 809, a tape position detecting circuit 810, and a microprocessor control circuit 806.

By receiving the control signal, the motor-driven machine control circuit 808 is responsible for tape loading operation for drawing out the magnetic tape 813 from a cassette 815 and winding around a video head drum 811, unloading operation for returning the magnetic tape 813 into the cassette 815, or operation for taking out the cassette 815 from the VTR.

Moreover, by rotating the video head 812 mounted on the video head drum 811, video signals are recorded and reproduced on and from the magnetic tape 813 through a video signal recording and reproducing circuit 809. It is also controlled to keep the feed speed constant when recording or reproducing the magnetic tape 813. Further, fast-forward and rewind operations are controlled.

In thus constituted conventional digital data recording and reproducing apparatus, the operation is described below.

While recording, a digital signal for expressing the cassette number is inserted in the VBI in the video signal, and recorded together with the video signal. While recording or in its preceding stage, data expressing the program title from the VBI in the video signal from broadcast waves and record start position data on the magnetic tape 813 are stored in a RAM 807. Thus, plural program titles are recorded in the cassette tape 815 of a specific cassette number. In this manner, a plurality of recorded tape cassettes are prepared. In the RAM 807, the cassette tape number, recorded title, and the record start position on the tape are stored.

When the user loads a recorded cassette tape 815 into the VTR in order to play a demanded recorded program, the VTR automatically reproduces for several seconds, reads out the cassette number inserted in the VBI in the video signal being reproduced, and reads out the program title corresponding to the cassette number from the RAM 807, and displays on the television screen. When the user designates a demanded program title, the record start position on the magnetic tape 813 is read out from the RAM 807, and the magnetic tape 813 is fast-forwarded or rewound to the staffing position of the recorded program, so that the recorded program can be viewed.

In the conventional digital data recording and reproducing apparatus, in this manner, by detecting the program title data of a recorded program from the VBI in the video signal from broadcast waves to store in the RAM 807, and by inserting and recording the cassette number data in the VBI in the video signal to be recorded and reading out when reproducing, it is mainly intended to select the program title corresponding to the cassette 815 and display on the television screen.

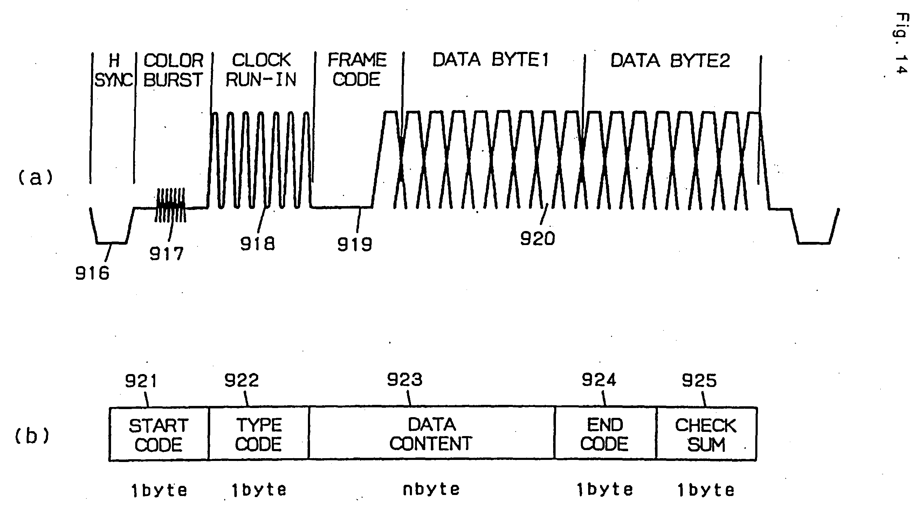

A signal format in the prior art is explained below while referring to Fig. 14. Fig. 14 shows the composition of digital signal recorded in the horizontal scanning period in the VBI in the conventional digital data recording and reproducing apparatus. Fig. 14 (a) shows the signal recorded in the conventional horizontal scanning period. Reference numeral 916 is a horizontal synchronizing signal (HSYNC), 917 is a color burst signal expressing the reference color phase, 918 is a clock run-in signal provided for adjusting the phase when reading out the digital signal, 919 is a frame code for distinguishing the beginning of digital signal, and 920 is a recorded signal composed of two bytes (16 bites).

Fig. 14 (b) shows digital data inserted in the VBI. Reference numeral 921 is a start code showing the beginning of data string, 922 is a type code (identification data) for identifying the content of the data string, 923 is data, 924 is an end code showing the end of data 923, and 925 is a code (check sum) for finding data error occurring when recording or reproducing. The digital data in Fig. 14 (b) is recorded by two bytes each in one horizontal scanning period as shown in Fig. 14 (a). At this time, the line number of the horizontal scanning period to be recorded is fixed. The entire digital data is detected by detecting the start code 921 and end code 924 of the line number determined at the time of reproduction.

In the conventional constitution, however, the digital data can be recorded or reproduced only in a predetermined horizontal scanning period, and the recording contents cannot be changed as required. For example, specific digital data out of plural types of digital data including subtitle data in the teletext cannot be recorded in the VBI more than usual, it is difficult to change freely the line in the VBI to be recorded, or it is hard to reproduce after once stopping in the midst of transfer of digital data.

Accordingly, it is impossible to record with flexibility, by, for example, providing a wider recording space for the information of a larger quantity when recording plural pieces of digital data differing in the quantity of information within the same time.

On the other hand, in the present commercial consumer-use analog VTR, the analog video signal of television signal standard of NTSC or PAL is designed to record and reproduce the frequency band of up to about 7 MHz, The actual usable frequency of digital data is about 1 MHz from the viewpoint of error rate, and it is equivalent to a bit rate of about 2 Mbits/sec. For example, when inserting digital data in 40 µsec in one horizontal period, data of about 80 bits (10 bytes) can be inserted.

However, as in the latest consumer-use digital VTR, digital data of tens of MHz cannot be recorded, and hence a more efficient recording method is demanded.

### SUMMARY OF THE INVENTION

The invention is intended to solve the problems of the prior art, and it is hence an object thereof to present a digital data recording and reproducing apparatus capable of recording and reproducing digital data on a magnetic tape by inserting in the VBI in a format for maintaining a degree of freedom in the recording density in a simple constitution.

The digital data recording and reproducing apparatus of the invention comprises:
(a) a pack generating circuit for generating a pack by dividing plural pieces of digital data, and adding pack header for identifying the contents of divided digital data;
(b) a pack mixing circuit for mixing outputs of the pack generating circuit at a specific dividing ratio of the number of horizontal scanning periods to be recorded in one field;
(c) a first pack input and output memory circuit for storing at least one pack of outputs of the pack mixing circuit, and sending out packs in the sequence of input;
(d) a pack inserting circuit for inserting the output of the first pack input and output memory circuit into a horizontal scanning period in the analog video signal;
(e) a magnetic recording and reproducing circuit for recording the output of the pack inserting circuit on a magnetic tape, or reproducing from the magnetic tape;
(f) a pack extracting circuit for extracting a pack from the output signal reproduced from the magnetic recording and reproducing circuit;
(g) a second pack input and output memory circuit for storing at least one pack of outputs of the pack extracting circuit, and sending out packs in the sequence of input;
(h) a pack separating circuit for identifying the contents of pack on the basis of the pack header from the output of the second pack input and output memory circuit, and separating the packs according to the classification of digital data; and
(i) a digital data restoring circuit for restoring from the output of the pack separating circuit into plural pieces of digital data,
   in which the frequency of 3.5 MHz or less is used as the signal for recording in the horizontal scanning period.

When recording on a magnetic tape, short packs are generated from plural pieces of digital data, and mixed by an arbitrary sequence and ratio, inserted in the VBI in the analog video signals, and recorded on a magnetic tape. When reproducing the data, packs are extracted from the VBI in the reproduced analog video signals, and plural pieces of digital data are restored by using the pack header preliminarily disposed in the packs, thereby achieving the purpose of having a degree of freedom in the recording density of digital data.

Moreover, by employing the aforesaid technique, it is also an object of the invention to present a digital data recording and reproducing apparatus capable of recording or reproducing the subtitle existing in the teletext efficiently on a magnetic tape.

The digital data recording and reproducing apparatus for realizing this purpose comprises:
(a) a subtitle extracting circuit for extracting a subtitle page from teletext signal;
(b) a digital data generating circuit for deleting invalid characters from the output of the subtitle extracting circuit, and extracting characters displayed on a TV screen, character attributes, and positions of characters on the screen;
(c) a pack generating circuit for generating a pack by dividing digital data produced from the digital data generating circuit, and adding pack header for identifying the contents of divided digital data;
(d) a first pack input and output memory circuit for storing at least one pack of outputs of the pack generating circuit, and sending out packs in the sequence of input;
(e) a pack inserting circuit for inserting the output of the first pack input and output memory circuit into a horizontal scanning period in the analog video signal;
(f) a magnetic recording and reproducing circuit for recording the output of the pack inserting circuit on a magnetic tape, or reproducing from the magnetic tape;
(g) a pack extracting circuit for extracting a pack from the output reproduced from the magnetic recording and reproducing circuit;
(h) a second pack input and output memory circuit for storing at least one pack of outputs of the pack extracting circuit, and sending out packs in the sequence of input; and
(i) a digital data restoring circuit for restoring from the output of the second pack input and output memory circuit into the subtitle page by identifying the contents of the pack on the basis of the pack header,
   in which the frequency of 3.5 MHz or less is used as the signal for recording in the horizontal scanning period.

When recording on a magnetic tape, a subtitle page is selected from the teletext signals, invalid characters are deleted, the characters to be displayed and their attribute information are extracted, and a pack is generated, and inserted and recorded in the VBI in the analog video signal to be recorded. When reproducing, the pack is extracted from the VBI in the reproduced analog video signals, and the subtitle page is restored from the pack header disposed at the beginning of the pack. Therefore, the subtitle can be recorded independently of the video signal.

### BRIEF DESCRIPTION OF THE DRAWINGS

Fig. 1 is a block diagram showing a constitution of a digital data recording and reproducing apparatus in a first embodiment of the invention.
Fig. 2 is a schematic diagram showing forming operation of recording and reproducing signal in the digital data recording and reproducing circuit in the first embodiment of the invention.
Fig. 3 is a composition diagram of digital signal inserted in the VBI in the first embodiment of the invention.
Fig. 4 is a composition diagram of a pack in the first embodiment of the invention.
Fig. 5 is a schematic diagram showing recording and reproducing operation when newly adding digital data in the first embodiment of the invention.
Fig. 6 is a block diagram showing a constitution of digital data recording and reproducing apparatus when the digital data recording and reproducing circuit is installed in a VTR in the first embodiment of the invention.
Fig. 7 is a block diagram showing a constitution of a digital data recording and reproducing circuit in a second embodiment of the invention.
Fig. 8 is a diagram showing an example of subtitle page in the second embodiment of the invention.
Fig. 9 is a flowchart for extracting the subtitle in the second embodiment of the invention.
Fig. 10 is a composition diagram of subtitle in the second embodiment of the invention.
Fig. 11 is a schematic diagram showing the recording and reproducing operation of digital data in the second embodiment of the invention.
Fig. 12 is a block diagram showing a constitution of digital data recording and reproducing apparatus when the digital data recording and reproducing circuit is installed in a VTR in the second embodiment of the invention.
Fig. 13 is a block diagram showing a constitution of a conventional digital data recording and reproducing apparatus.
Fig. 14 is a composition diagram of digital signal inserted in the VBI in the conventional digital data recording and reproducing apparatus.

### DETAILED DESCRIPTION OF THE INVENTION

Referring now to the drawings, preferred embodiments of the invention are described in detail below.

### (First embodiment)

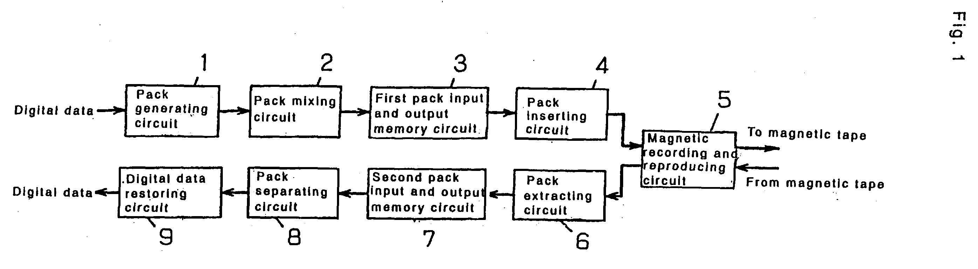

Fig. 1 is a block diagram showing a constitution of a digital data recording and reproducing apparatus according to embodiment 1 of the invention.

Reference numeral 1 is a pack generating circuit for generating packs uniform in length by dividing plural pieces of digital data, and adding pack header for identifying the contents of divided digital data, 2 is a pack mixing circuit, which divides the VBI in one field of the video signal into an arbitrary number of horizontal scanning periods and mixes the packs of digital data at this dividing ratio in a sequence of digital data, 3 is a first pack input and output memory circuit for storing at least one pack, and sending out packs in the sequence of input, 4 is a pack inserting circuit for inserting the pack into a horizontal scanning period in the VBI in the analog video signal, 5 is a recording or reproducing circuit for recording or reproducing the analog video signal on a magnetic tape, 8 is a pack separating circuit for identifying the contents of pack on the basis of the pack header, and separating the packs according to the classification of digital data, and 9 is a digital data restoring circuit for restoring from the pack into plural pieces of digital data.

Recently, teletext broadcasting, which digitized character data are inserted into the VBI in the analog video signal, is popularizing in European countries, etc. The digital data include the program title and channel of the program to be recorded, record start time, day of week, broadcasting station name, and others. These digital data are obtained from the teletext data. According to the PAL or SECAM system television broadcast standard, the teletext data is distributed by the broadcasting stations by inserting into the VBI in the analog video signal as digital data at transfer rate of 6.95 Mbits/sec bit rate.

Generally, however, the analog video signal uses a frequency band of up to about 7 MHz, and it cannot be used at higher frequency. When the analog video signal having teletext data is recorded or reproduced in the analog VTR for consumer use, the teletext digital signal causes an error and it cannot be reproduced correctly. This is because the consumer-use VTR is designed to record and reproduce analog video signals in the band of up to 7 MHz. That is, in this VTR, the frequency of digital data that can be recorded and reproduced correctly is half of 7 MHz (that is, 3.5 MHz), and in practical use it is about 1 MHz, or in terms of the transfer rate (bit rate) it is about 2 Mbits/sec.

The pack generating circuit 1 divides plural pieces of digital data such as program titles at every length of 4 bytes, and adds the 1-byte long pack header for identifying the divided digital data at its beginning, and generates uniform packs in the length of 5 bytes.

The pack mixing circuit 2 divides the VBI in one field of the video signal into an arbitrary number of horizontal scanning periods, and mixes the packs of digital data at this dividing ratio in an arbitrary sequence of digital data.

The pack is put into the first pack input and output memory circuit 3. The pack is, in a form inserted in the VBI in the video signal, recorded on a magnetic tape or reproduced from the magnetic tape, by the magnetic recording and reproducing circuit 5. Therefore, recorded packs are intermittent in time. On the other hand, the calculation processing time for generating packs from the digital data is needed. For this calculation processing, by using a memory of FIFO format as the first pack input and output memory circuit 3, the recorded data can be shifted in the direction of the time axis in the sequence of input and output, so that it is possible to execute with a sufficient time allowance.

In the pack inserting circuit 4, the data is recorded on the magnetic tape by the magnetic recording and reproducing circuit 5 in a form being inserted in a period of five horizontal scanning lines existing in the VBI in every field of the video signals. When reproducing, the execution is done in the reverse order. That is, from the magnetic tape, the recorded video signal is reproduced by the magnetic recording and reproducing circuit 5, and the packs are successively extracted by the pack extracting circuit 6, and put into the second pack input and output memory circuit 7. In the pack separating circuit 8, on the basis of the pack header, each digital data is reorganized, and plural pieces of digital data are restored by the restoring circuit 9.

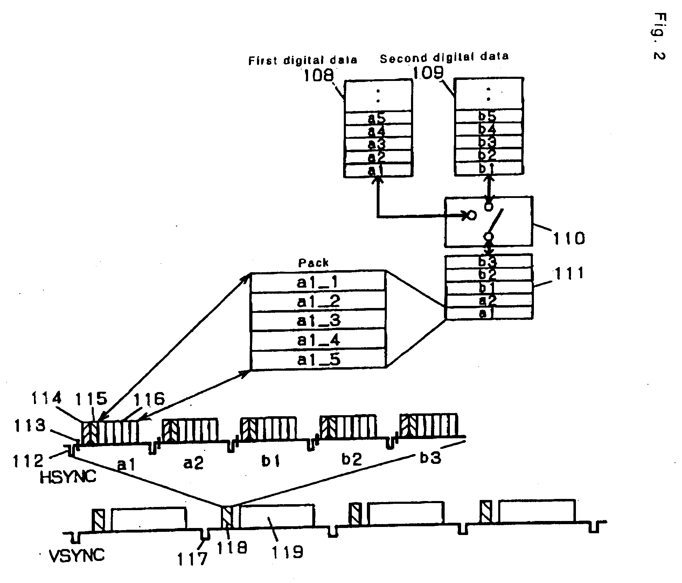

The signal format is explained by referring to Fig. 2.

Fig. 2 is a schematic diagram showing the forming operation of recorded and reproduced signal in the digital data recording and reproducing circuit in the first embodiment of the invention. Reference numeral 108 is first digital data, 109 is second digital data, a1, a2, a3, a4, a5 are packs made from the first digital data 108, and b1, b2, b3, b4, b5 are packs made from the second digital data 109. Reference numeral 110 is a pack mixing circuit or pack separating circuit, corresponding to the pack mixing circuit 2 or pack separating circuit 8 in Fig. 1, and 111 is a first pack input and output memory circuit or second pack input and output memory circuit, corresponding to the first pack input and output memory circuit 3 ore second pack input and output memory circuit 7 in Fig. 1, being composed of, for example, FIFO format memory. Moreover, a1-1, a1-2, a1-3, a1-4, a1-5 are byte data in the pack a1, and the pack header is included in a1-1, and arbitrary digital data are present in a1-2, a1-3, a1-4, and a1-5.

Reference numeral 112 is a horizontal sync signal (HSS), 113 is a color burst signal, 114 is a clock run-in signal, 115 is a frame code, 116 is a pack inserted in the video signal region, 117 is a vertical sync signal (VSS), 118 is a pack inserted in five lines of VBI, and 119 shows an analog video signal region.

The first digital data 108 and second digital data 109 are different kinds of data, for example, 108 is the cassette number and 109 is the program data to be recorded.

In the pack separating circuit 110, the packs are changed over in the sequence of a1, a2, b1, b2, b3, and are put in or sent out from the first pack input and output memory circuit 3 when recording, or in or from the second pack input and output memory circuit 11 when reproducing.

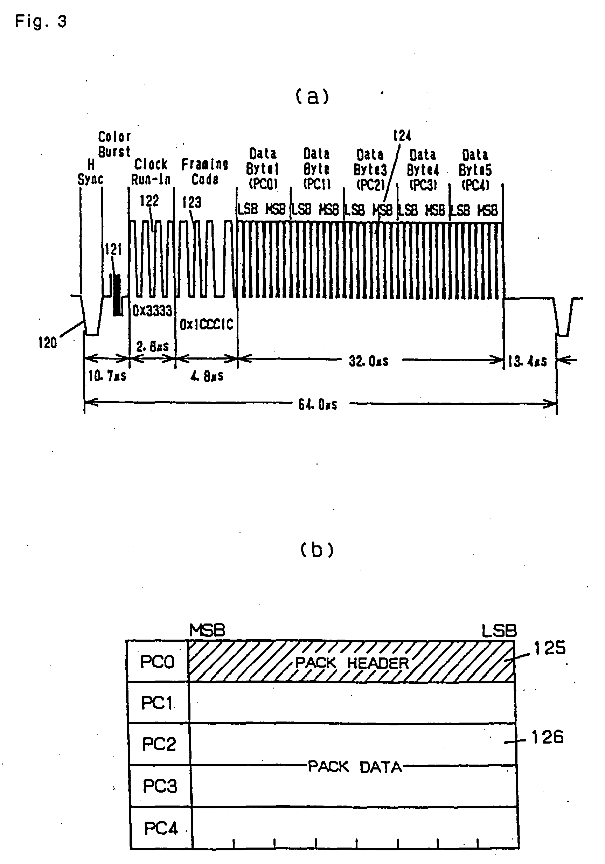

Fig. 3 shows the constitution of the digital signal to be inserted in the horizontal scanning period of VBI (116 in Fig. 2) in the first embodiment 1 of the invention. Fig. 3 (a) shows the signal to be inserted in the horizontal scanning period, in which reference numeral 120 is a horizontal sync signal, 121 is a color burst signal, 122 is a clock run-in signal, 123 is a frame code, and 124 shows a pack inserted in the video signal region.

By assigning the pack in the length of 5 bytes (40 bits) with the duration of 32 µsec, the data can be recorded in or reproduced from the magnetic tape with a practically sufficient reliability at the transfer rate of 40 bits/32 µsec = 1.25 Mbits/sec as mentioned above.

Fig. 3(b) shows the composition of the pack 124, in which the beginning byte PC0 is the pack header 125, and the remaining four bytes (PC1, PC2, PC3, PC4) are digital data 126 that can be used freely.

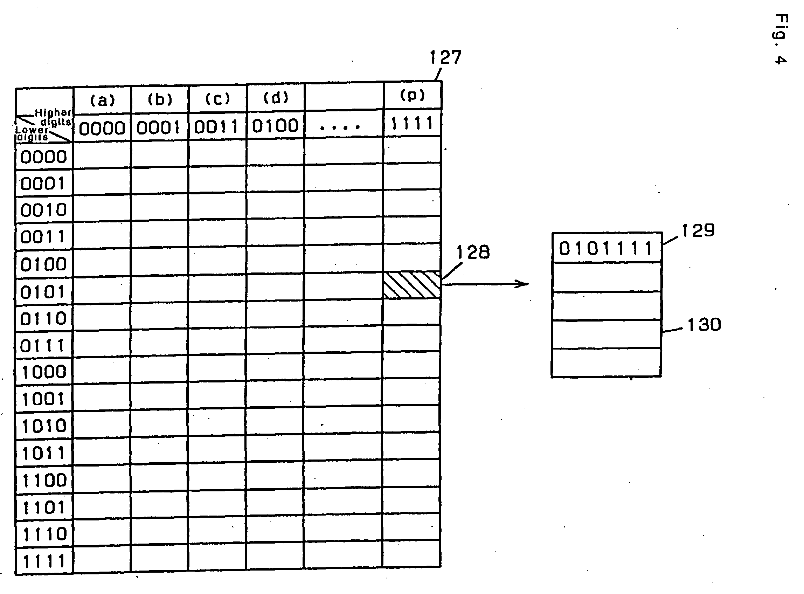

Fig 4 is a classification diagram by pack header of the pack in the first embodiment. Reference numeral 127 shows the matrix classifying the digital data (a) to (P) by upper four bits and lower four bits of the pack header. Reference numeral 128 is a pack, 129 is a pack header of the pack 128, and 130 is digital data of pack 128. The digital data can be expressed by using 16 values from 0000 to 1111 of upper four bits. Each digital data can identify up to 16 types of packs by using the values from 0000 to 1111 of the lower four bits. One pack of digital data (P) is 128.

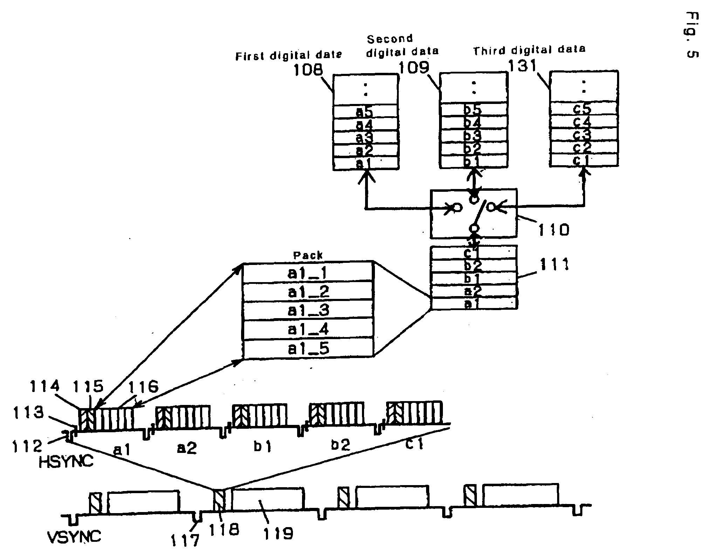

Fig. 5 is a schematic diagram showing the forming operation of recorded and reproduced signals in the digital data recording and reproducing circuit when third digital data 131 is added newly in the embodiment of the invention. In the first pack input and output memory circuit or second pack input and output memory circuit 111, the packs are stored in the sequence of a1, a2, b2, and c1, and inserted in the VBI 118.

In this way, by dividing the horizontal scanning periods in the VBI by a specific value determined arbitrarily, and mixing the packs, there is a degree of freedom in the recording density of the digital data that can be inserted. Moreover, by effectively utilizing the VBI existing in a limited time interval, digital data can be efficiently recorded on a magnetic tape.

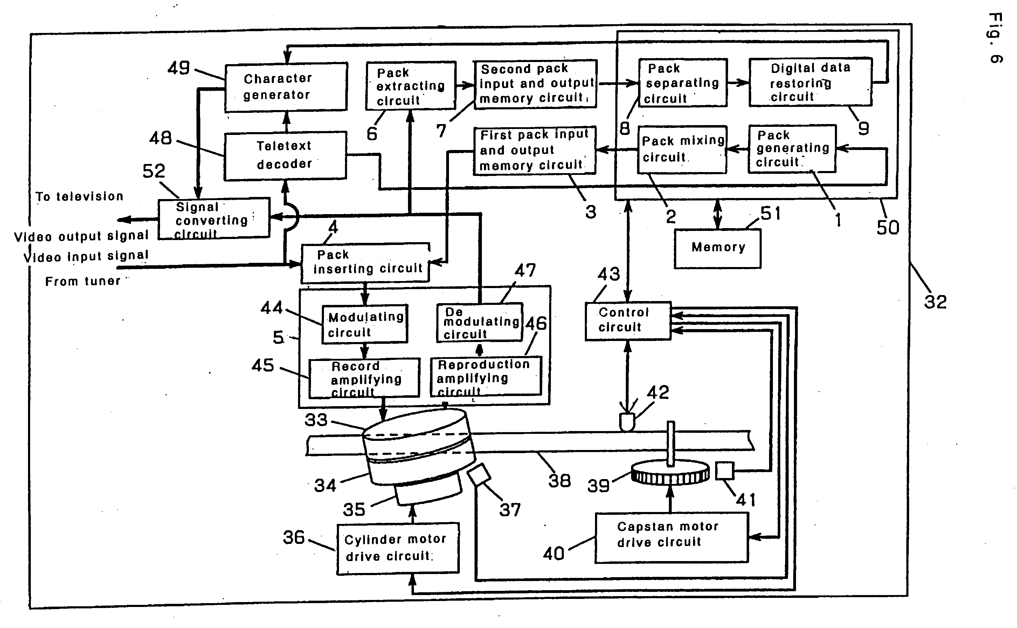

Fig. 6 is a block diagram showing a constitution of mounting of the digital data recording and reproducing circuit on a VTR in the first embodiment.

The VTR 32, in its inside, comprises a head drum capable of guiding the tape, composed of a rotary head cylinder 33 mounting a video head (not shown) for recording the video signal and audio signal on a magnetic tape 38, or reproducing from the magnetic tape 38, and a fixed guide drum 34 for guiding the tape. The magnetic tape 38 is wound on the head drum obliquely at a specified angle (about 180°), and is driven at a specified speed. In this constitution, magnetic recording and reproducing operation is realized by the hitherto known helical scanning method.

The rotary head cylinder 33 is driven by a cylinder motor 35 as follows. That is, in a control circuit 43, the vertical sync signal in the video signal to be recorded or its related signal is entered when recording, or the vertical sync signal or its related signal and the same frequency signal as the reference signal, at the time of reproducing, as one input, and the signal detecting the rotating speed of the cylinder motor 35 by the cylinder FG (frequency generator) 37 is added as other input. The control circuit 43 issues a servo error signal so that the phase may be locked at both sides, and the rotary head cylinder 33 is driven by a cylinder drive circuit 36. When recording, the above reference signal is recorded in the linear control track (not shown) of the magnetic tape, by means of the control head 42.

Moreover, when recording, the magnetic tape 38 is driven at a constant specific speed by the capstan motor 39. That is, when recording, the signal detecting the rotating speed of the capstan motor 39 by the capstan FG 41 and the cylinder rotating frequency signal from the cylinder FG 37 are applied to the control circuit 43. In order that both may be locked in phase, a servo error signal is issued, and the magnetic tape 38 is driven at constant speed by driving the capstan motor 39 through the capstan motor drive circuit 40.

When reproducing, the control circuit 43 generates a servo error signal. The capstan motor 39 is driven through the capstan motor drive circuit 40 so that the reproduced control signal and the signal detected from the cylinder FG 37 may be locked in phase. Thus, the known tracking control is executed.

In such constitution, recording or reproduction is executed by feeding digital data to the video head in the operating magnetic tape drive means through the recording and reproducing processing circuit 5.

According to the instruction by the user, the program title data is extracted from the teletext signal obtained from the tuner in the teletext decoder 48. The program title data is formed into packs in the pack generating circuit 1 as mentioned above together with the digital data such as broadcasting station name, record start time and channel number managed by the microcontroller, and inserted into the VBI in the analog video signal by the pack inserting circuit 4 through the pack mixing circuit 2 and first pack input and output memory circuit 3.

Afterwards, the analog video signal is frequency-modulated by a modulating circuit 44 in the recording and reproducing processing circuit 5, and amplified in a record amplifying circuit 45, and recorded on the magnetic tape 38 through the video head. When reproducing, the signal reproduced from the magnetic tape 38 by the video head is amplified in a reproduction amplifying circuit 46, and frequency-demodulated in a demodulating circuit 44, so that an analog video signal is obtained.

That is, as mentioned above, from the horizontal scanning period in the VBI in the reproduced analog video signal, the pack is extracted by the pack extracting circuit, and restored into the program title, broadcasting station name, record start time, channel, etc. by the second pack input and output memory circuit 7, pack separating circuit 8, and digital data restoring circuit 9.

These items of data are stored in a memory 51, and converted into character data in a character generator 49, so that characters are displayed on the television screen by a signal converting circuit 52.

Thus, according to the first embodiment, packs of different digital data can be mixed in arbitrary sequence by dividing depending on the quantities of data of plural pieces of digital data to be recorded simultaneously, so that the recording density has a degree of freedom. That is, specific digital data can be recorded by inserting into the VBI more than in the prior art for a certain time. Further, the digital data can be resumed after temporarily interrupting in the midst of transfer.

### (Second embodiment)

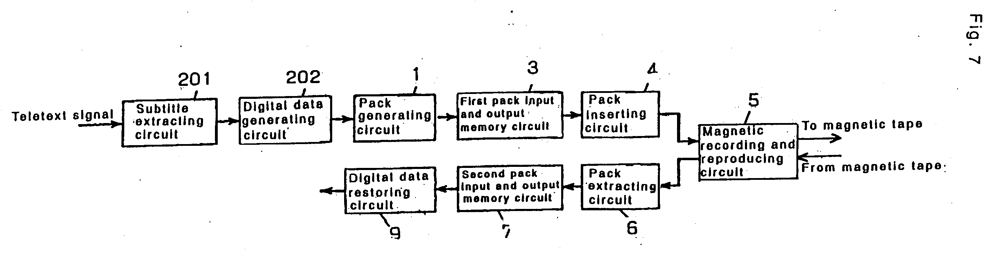

Fig. 7 is a block diagram showing a constitution of a digital data recording and reproducing circuit in a second embodiment of the invention. In Fig. 7, the same components as in the first embodiment shown in Fig. 1 are identified with same reference numerals, and their explanation is omitted.

Reference numeral 201 is a subtitle extracting circuit for extracting a subtitle page from teletext signal, and 202 is a digital data generating circuit for deleting invalid characters from the subtitle extracting circuit, and extracting characters to be displayed on a TV screen, character attributes, and positions of characters on the TV screen. The digital data generated in the circuit 202 is processed same as explained in Fig. 1, that is, the digital data of the aforesaid subtitle page is divided by the pack generating circuit 1 in every four bytes, and one-byte pack header is added to the beginning of each divided four-byte digital data, and uniform packs in the length of five bytes are generated.

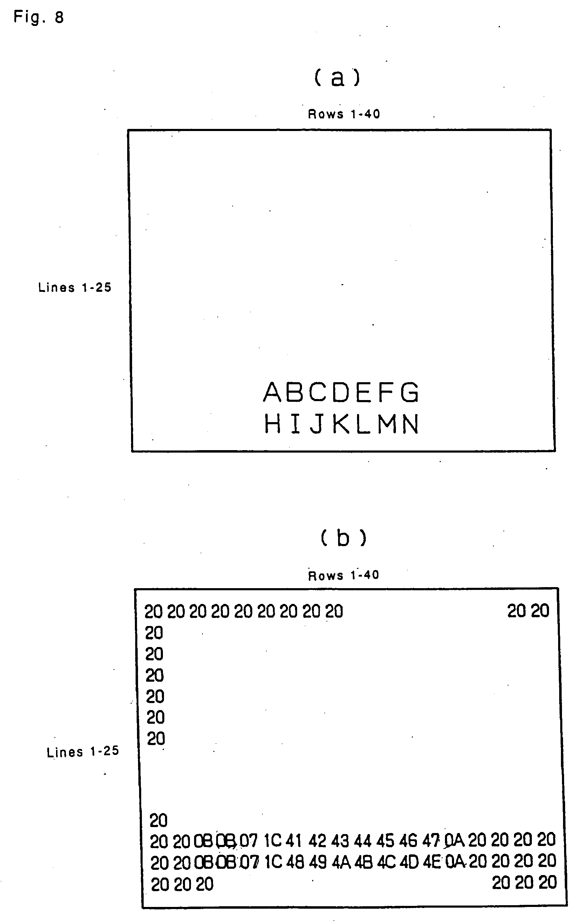

Fig. 8 shows an example of subtitle page in the second embodiment of the invention. Fig. 8 (a) shows the subtitle page capable of expressing characters in 25 lines and 40 rows of teletext signals. When a character string ABCDEFGHIJKLMN is displayed in two lines, it is directly displayed on the TV screen together with the image.

Fig. 8 (b) shows the screen information in Fig. 8 (a) is displayed on the screen by hexadecimal notation. That is, in hexadecimal notation, 0B is a start of character, 07 is a white character, 1C is a black background of character, and 0A is an end of character, which are original control codes of subtitle. Further, character 'A' is 41 in hexadecimal notation, 'B' is 42, 'C' is 48, 'D' is 44, 'E' is 45, 'F' is 46, 'G' is 47, 'H' is 48, 'I' is 49, 'J' is 4A, 'K' is 4B, 'L' is 4C, 'M' is 4D, 'N' is 4E, and the space is 20.

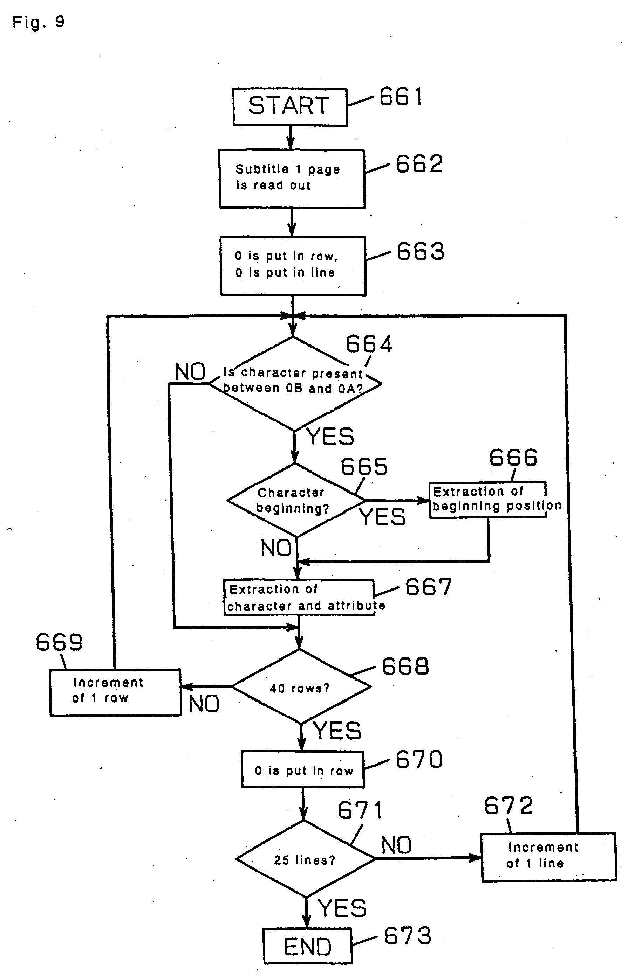

Fig. 9 shows a flowchart for extracting characters and character attributes from the subtitle page data in Fig. 8, and it explains the processing of the digital data generating circuit 202 in Fig. 7.

Starting from step 661, data for one page of subtitle shown in Fig. 8 (b) is read out at step 662. At step 663, 0 is put in the line and row. At step 664, it is judged whether the character data of the position corresponding to the line and row is present between the control codes 0B and 0A. If there is no character data between 0B and 0A, it is regarded as invalid character and ignored, and the row is increased by one at steps 668, 669. When the row reaches 40, at step 670, 0 is put in the row, and the line is increased by one at steps 671, 672. By repeating this flow, the display character data and its attribute data can be detected at step 665. In the case of character beginning at each line, the beginning character position is extracted at step 666. At step 667, the character data and its attribute data are extracted.

This flow is repeated up to line 25 and row 40, and the process is terminated at step 673.

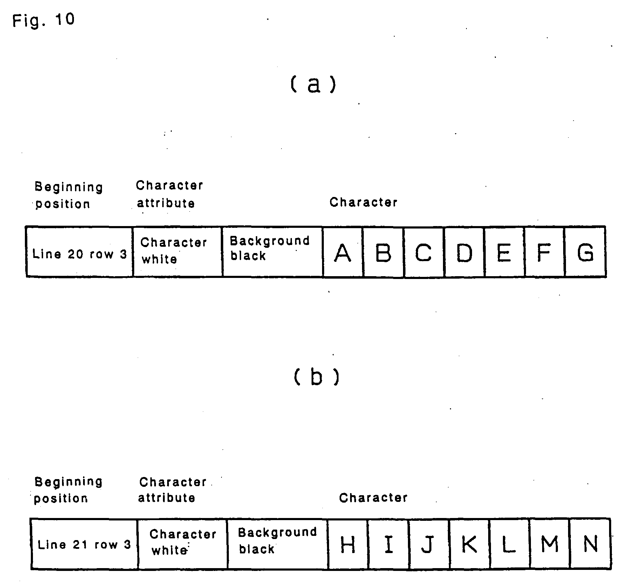

By this processing, the subtitle data (Fig. 8a) shown in Fig. 10 can be obtained.

Fig. 10 is a composition diagram of subtitle data in the second embodiment of the invention. In Fig. 10 (a), line 20 row 3 is the beginning of characters, the character color is white, the background is black, and the characters are ABCDEFG, and in Fig. 10 (b), line 21 row 3 is the beginning of characters, the character color is black, the background is black, and the characters are HIJKLMN.

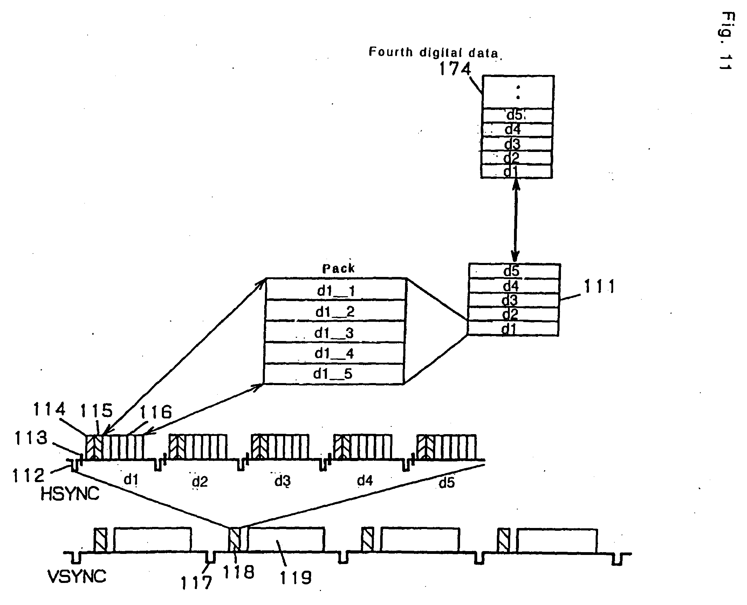

Fig. 11 is a schematic diagram explaining the recording and reproducing operation in the digital data recording and reproducing circuit in the second embodiment of the invention. In Fig. 11, the same components as in the first embodiment shown in Fig. 2 are identified with same reference numerals, and their explanation is omitted.

The subtitle page data is handled as fourth digital data 174 packed in a form of d1, d2, d3, d4, d5. When recording, the packed subtitle data 174 is put into the first pack input and output memory circuit 111 (3 in Fig. 7). In this embodiment (Fig. 11), packs are entered in the sequence of d1, d2, d3, d4, d5, and are issued in the same sequence. As mentioned above, pack d1 is composed of five bytes of d1_1, d1_2, d1_3, d1_4, and d1_5, and the pack header is present in d1-1, and subtitle page data is present in d1_2, d1_3, d1_4, and d1_5. By the pack inserting circuit 4 in Fig. 7, they are inserted into five lines in the VBI in the video signals in one field as indicated by 116, and are recorded on a magnetic tape through the magnetic recording and reproducing circuit 5. When reproducing, on the other hand, as mentioned above, the original subtitle page is restored in the reverse sequence through the pack extracting circuit 6, second pack input and output memory circuit 7, and digital data restoring circuit 9.

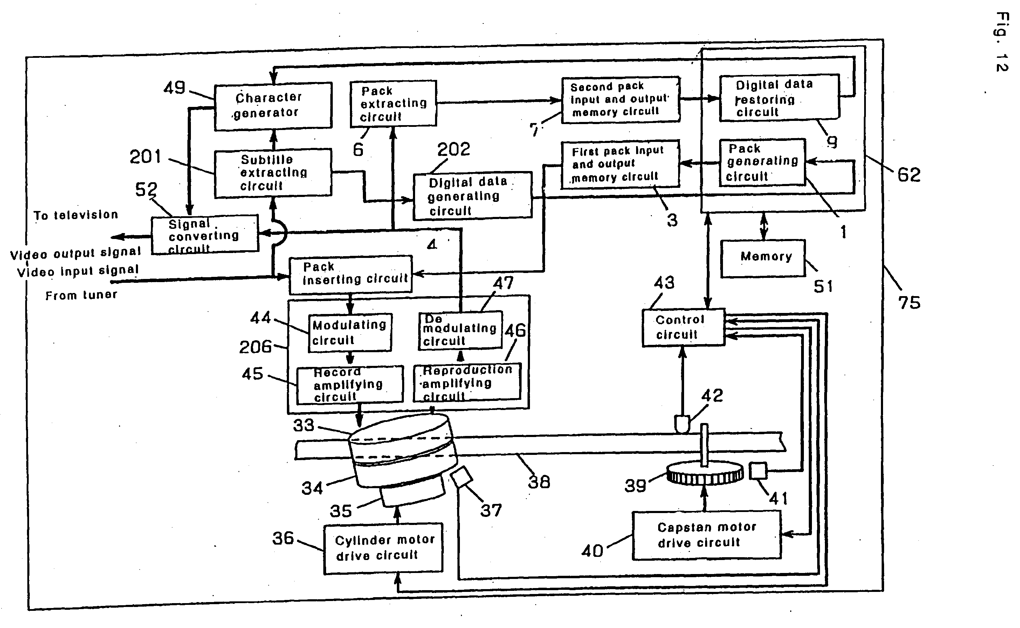

Fig. 12 is a block diagram showing a constitution of installation of the digital data recording and reproducing circuit in a VTR in the second embodiment of the invention. In the internal constitution of a VTR 75, the sane components as in the internal constitution of the VTR 32 in Fig. 6 of the first embodiment are identified with same reference numerals, and their explanation is omitted.

The teletext signals contained in the video input signals obtained from the tuner are fed into the subtitle extracting circuit 201, in which subtitle page data is extracted. The subtitle page data is, as mentioned above, packed in the digital data generating circuit 202 and pack generating circuit 1, and inserted into the analog video signal by the pack inserting circuit through the first pack input and output memory circuit 3.

Afterwards, the analog video signal is frequency-modulated in a format appropriate for magnetic recording in the magnetic recording and reproducing circuit 206, and is recorded on a magnetic tape 38. When reproducing, the signal is frequency-demodulated in the magnetic recording and reproducing circuit 206 from the magnetic tape 38, and the analog video signal is obtained. The original subtitle page data is restored in the digital data restoring circuit 9 from the packs which is extracted in the pack extracting circuit 6 from the reproduced analog video signal. The restored subtitle page data is converted into character data in the character generator 49, and inserted as characters into the television screen by the signal converting circuit 52.

Thus, according to the second embodiment, deleting invalid characters from the subtitle page in the teletext signal, only the character codes to be displayed and the character attributes can be recorded or reproduced on or from the magnetic tape. Therefore, the subtitle data can be recorded by separating from the video signals.

According to the invention, as described herein, by dividing plural pieces of digital data in short forms, and adding the pack header for identifying the contents of the divided digital data at the beginning of the divided digital data, packs of different data can be mixed in an arbitrary sequence, and a degree of freedom is assured in the recording density of each digital data in the VBI region, which brings about an excellent effect.

Moreover, by deleting invalid characters from the subtitle page existing in the teletext, since the character codes for display and character attributes only are recorded on a magnetic tape, the subtitle data can be recorded efficiently, independently of the video signal, which is also an excellent effect.

## Claims

1. A digital data recording and reproducing apparatus comprising:
(a) a pack generating circuit for generating a pack by dividing plural pieces of digital data, and adding pack header for identifying the contents of divided digital data;
(b) a pack mixing circuit for mixing outputs of said pack generating circuit at a specific dividing ratio of the number of horizontal scanning periods to be recorded in one field;
(c) a first pack input and output memory circuit for storing at least one pack of outputs of said pack mixing circuit, and sending out packs in the sequence of input;
(d) a pack inserting circuit for inserting the output of said first pack input and output memory circuit into a horizontal scanning period of an analog video signal;
(e) a magnetic recording and reproducing circuit for recording the output of said pack inserting circuit on a magnetic tape, or reproducing from the magnetic tape;
(f) a pack extracting circuit for extracting a pack from the output of said magnetic recording and reproducing circuit;
(g) a second pack input and output memory circuit for storing at least one pack of outputs of said pack extracting circuit, and sending out packs in the sequence of input;
(h) a pack separating circuit for identifying the contents of pack on the basis of the pack header from the output of said second pack input and output memory circuit, and separating the packs according to the classification of digital data; and
(i) a digital data restoring circuit for restoring from the output of said pack separating circuit into plural pieces of digital data.

2. A digital data recording and reproducing apparatus comprising:
(a) a subtitle extracting circuit for extracting a subtitle page from teletext signal;
(b) a digital data generating circuit for deleting invalid characters from the output of said subtitle extracting circuit, and extracting characters to be displayed on a TV screen, character attributes, and positions of characters on the TV screen;
(c) a pack generating circuit for generating a pack by dividing digital data produced from said digital data generating circuit, and adding pack header for identifying the contents of divided digital data;
(d) a first pack input and output memory circuit for storing at least one pack of outputs of said pack generating circuit, and sending out packs in the sequence of input;
(e) a pack inserting circuit for inserting the output of said first pack input and output memory circuit into a horizontal scanning period of an analog video signal;
(f) a magnetic recording and reproducing circuit for recording the output of said pack inserting circuit on a magnetic tape, or reproducing from the magnetic tape;
(g) a pack extracting circuit for extracting a pack from the output reproduced from said magnetic recording and reproducing circuit;
(h) a second pack input and output memory circuit for storing at least one pack of outputs of said pack extracting circuit, and sending out packs in the sequence of input; and
(i) a digital data restoring circuit for restoring from the output of said second pack input and output memory circuit into the subtitle page by identifying the contents of the pack on the basis of the pack header.

3. A digital data recording and reproducing apparatus of claim 1 or 2, wherein the frequency of 3.5 MHz or less is used as the signal for recording in the horizontal scanning period.
